# EUROPÄISCHE PATENTSCHRIFT

(11) **EP 1 163 730 B1**
(45) Veröffentlichungstag und Bekanntmachung des Hinweises auf die Patenterteilung: **18.08.2004**
(21) Anmeldenummer: 00915131.7
(22) Anmeldetag: 01.03.2000
(51) Int. Cl.: H04B 1/44, H04B 1/56, H02J 7/00

(54) **LASTSYNCHRONE VERDOPPLER-LADUNGSPUMPE MIT INTEGRIERTEM LÄNGSREGLER**
SYNCHRONOUS LOAD DOUBLER-CHARGE PUMP WITH AN INTEGRATED IN-PHASE REGULATOR
POMPE A CHARGE A DOUBLEUR ET A SYNCHRONISATION DE CHARGE, COMPORTANT UN REGULATEUR SERIE INTEGRE

(30) Priorität: 23.03.1999 DE 19913082
(43) Veröffentlichungstag der Anmeldung: 19.12.2001
(73) Patentinhaber: SIEMENS AKTIENGESELLSCHAFT, 80333 München (DE)
(72) Erfinder: WANNENMACHER, Volker, D-81369 München (DE)
(86) Internationale Anmeldenummer: PCT/DE2000/000609
(87) Internationale Veröffentlichungsnummer: WO 2000/057567

(56) Entgegenhaltungen:
- EP-A- 0 561 257
- EP-A- 0 654 911
- GB-A- 2 310 570

## Beschreibung

Die vorliegende Erfindung bezieht sich auf eine lastsynchrone Verdoppler-Ladungspumpe mit integriertem Längsregler und insbesondere auf eine Schaltung zur Spannungshochsetzung für gepulst betriebene Verbraucher gemäß dem Oberbegriff des Anspruchs 1.

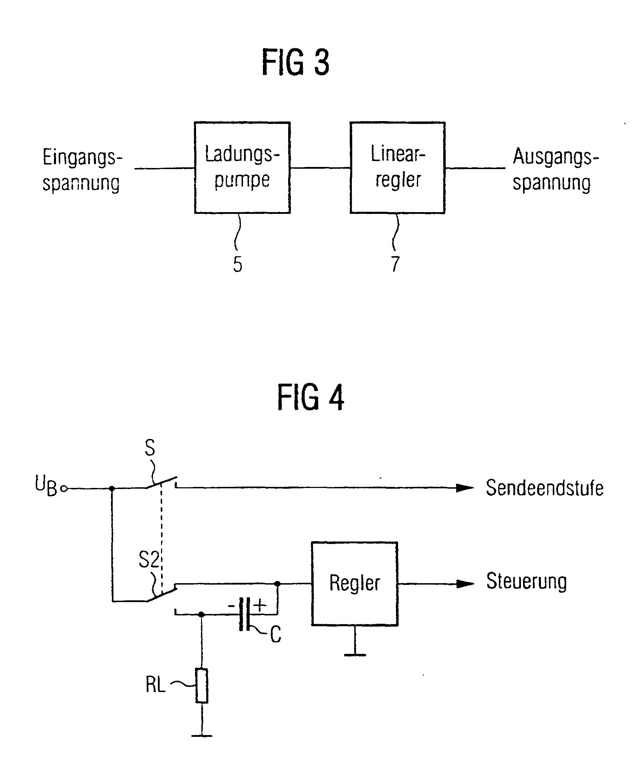

Eine Schaltung gemäß dem Obergriff des Anspruchs 1 ist beispielsweise aus der EP-A-0561257 bekannt und ist in Figur 4 dargestellt. Schaltungen zur Spannungshochsetzung werden beispielsweise für TDMA-Mobilfunkgeräte benötigt, bei denen in einem Frequenzband mehrere Zeitkanäle vorhanden sind und in Zeitschlitzen gesendet wird, wodurch während der kurzen Sendebursts ein relativ hoher Batteriestrom fließt, der zu so hohen Spannungsabfällen in der Batterie und den Zuleitungen führt, daß die kritische Versorgungsspannung für integrierte Schaltungen oder Spannungsregler besonders am Ende der Batterieentladezeit unterschritten werden kann.
Bei der bekannten in Figur 4 dargestellten Schaltung zur Spannungshochsetzung ist beispielsweise eine Batteriespannung U_{B} von beispielsweise 6 Volt vorgesehen, die über einen Schalter S mit zwei Umschaltkontakten die Versorgungsspannung für die Sendeendstufe eines Mobilfunkgeräts einerseits und die kritische Versorgungsspannung für integrierte Schaltungen andererseits liefert. Damit die letztgenannte Versorgungsspannung für die spannungskritischen Schaltungsteile nicht unter einen kritischen Wert abfällt, ist in diesem Weg ein Spannungshochsetzer angeordnet. Dieser enthält einen Kondensator C und einen Ladewiderstand R Index L. Im nicht-Sendebetrieb wird der Kondensator aufgeladen. Während der in der Sendeendstufe ausgesendeten Sendebursts wird die Spannung des Kondensators C im Versorgungsweg der spannungskritischen Schaltungsteile zu der Batteriespannung addiert. Dem Spannungshochsetzer ist ein Regler für beispielsweise 5 Volt nachgeschaltet, dessen Ausgangsspannung den nachfolgenden Schaltungsteilen zur Steuerung zugeführt wird. Der geschaltete Spannungshochsetzer gemäß Figur 4 stellt sicher, daß die Eingangsspannung des 5-Volt Spannungsregler für die Steuerung immer über 5 Volt bleibt, auch wenn die Batteriespannung U_{B} bedingt durch den Innenwiderstand der Batterie, weit unter 5 Volt absinkt.

Die bekannte Schaltung von Figur 4 läßt sich somit vereinfacht wie in Figur 3 darstellen, d. h. daß eine Kombination einer Ladungspumpe 5 mit folgendem Linearregler 7. In dem Linearregler 7 wird die Ausgangsspannung mit einem Sollwert verglichen. Ein solcher Linearregler 7, der der Ladungspumpe 5 nachgeschaltet ist, kann somit die Spannungshaltung der Ausgangsspannung herstellen.

Ausgehend von der oben ausgeführten bekannten Schaltung ist es Aufgabe der vorliegenden Erfindung, eine Technik bereitzustellen, die eine bautechnische Vereinfachung der Spannungsregelfunktion in einer Spannungshochsetzschaltung (Ladungspumpe) ermöglicht.

Diese Aufgabe wird erfindungsgemäß durch die Merkmale des Anspruchs 1 gelöst. Die abhängigen Ansprüche bilden den zentralen Gedanken der vorliegenden Erfindung in besonders vorteilhafter Weise weiter.

Erfindungsgemäß ist also eine Schaltung zur Spannungshochsetzung für gepulst betriebene Verbraucher wie beispielsweise Mobilfunkgeräte vorgesehen. Eine solche Schaltung wird oft auch als "Lastsynchrone Verdoppler-Ladungspumpe bezeichnet. Dabei ist ein Kondensator vorgesehen, der durch eine Schalteinheit so angesteuert ist, daß er in der Zeit, während der der Verbraucher nicht im Betrieb ist, durch eine Batterie aufgeladen wird und seine Spannung während des Betriebs des Verbrauchers zu der Spannung der Batterie addiert wird. Die Schalteinheit weist dabei einen Transistor auf, dessen Widerstandswert während des Betriebs des Verbrauchers durch eine Regelschaltung so ansteuerbar ist, daß die Ausgangsspannung der Schaltung zur Spannungshochsetzung im wesentlichen einem Sollwert entspricht.

Der Transistor kann parallel zu dem Kondensator geschaltet sein.

Die Schalteinheit kann weiterhin einen mit dem Transistor in Serie verbundenen Schließschalter aufweisen.

Während des Nicht-Betriebs des Verbrauchers kann der Transistor in den nichtleitenden Zustand angesteuert sein.

Der Transistor und die Regelschaltung können vorteilhafterweise Teil einer integrierten Schaltung sein.

Gemäß der vorliegenden Erfindung ist weiterhin ein Mobilfunkgerät wie beispielsweise ein Mobiltelefon vorgesehen, das eine Schaltung zur Spannungshochsetzung wie oben beschrieben aufweist.

Im folgenden wird nun ein Ausführungsbeispiel der Erfindung bezugnehmend auf die Figuren der begleitenden Zeichnungen erläutert, so daß weitere Merkmale, Vorteile und Eigenschaften einer Schaltung gemäß der vorliegenden Erfindung zu Tage treten.
Figur 1 zeigt eine erfindungsgemäße lastsynchrone Ladungspumpe mit integrierter Längsregelung,
Figur 2 zeigt schematisch eine vereinfachte Darstellung der Schaltung von Figur 1,
Figur 3 zeigt schematisch die Kombination einer Ladungspumpe mit einem Linearregler, und
Figur 4 zeigt eine erfindungsgemäße Schaltung zur Spannungshochsetzung für gepulst betriebene Verbraucher.

Wie bereits Eingangs ausgeführt, wurde bereits eine lastsynchrone Verdoppler-Ladungspumpe vorgeschlagen, die auf verhältnismäßig einfache Weise die Versorgung eines gepulst betriebenen Verbrauchers ermöglicht. Zur Lösung des Problems der Spannungsregelung ist ein nachgeschalteter Linearregler vorgesehen, der die Spannung auf die erforderliche Verbraucherspannung von beispielsweise 5 Volt reduziert.

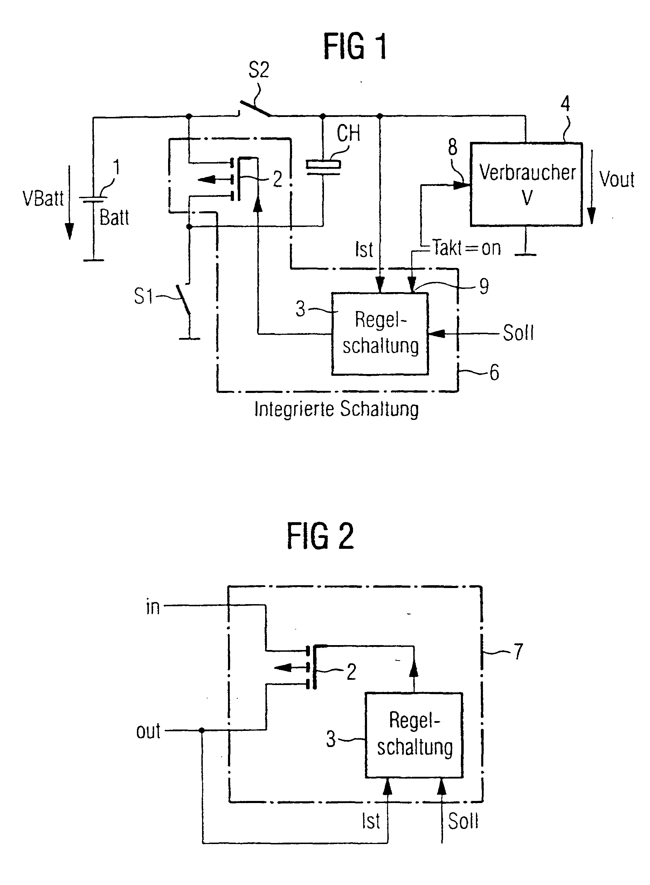

Figur 2 zeigt den internen Aufbau eines Linearreglers 7. Dieser Linearregler 7 reduziert die Spannung auf die erforderliche Verbraucherspannung, in dem ein Transistor 2 als steuerbarer Widerstand betrieben wird. In der Regelschaltung 3 des Linearreglers 7 wird die Ausgangspannung mit einem Sollwert verglichen und davon abhängig der Transistor 2 als steuerbarer Widerstand betätigt. Die Sollwertvorgabe für die Regelschaltung 3 kann integriert ausgeführt sein und muß nicht als Pin-Anschluß nach außen geführt sein.

Bezugnehmend auf Figur 1 soll nunmehr erläutert werden, wie erfindungsgemäß die Kombination Ladungspumpe und Linearregler unter einer bautechnischen Vereinfachung kombiniert werden kann. Wie in Figur 1 ersichtlich ist der Transistor 2, der in seinem eingeschalteten Zustand als steuerbarer Widerstand betrieben werden kann, im Kondensator CH parallel geschaltet. Der Transistor 2 wird dabei durch eine Regelschaltung 3 angesteuert. Die Regelschaltung 3 erzeugt ein Ausgangssignal, namlich das Ansteuersignal für den Transistor 2 abhängig von einem Vergleich eines Sollwerts mit dem Istwert der Eingangsspannung eines Verbrauchers 4. Die Eingangsspannung für den Verbraucher 4 und somit die Ausgangsspannung Vₒᵤₜ der Schaltung zur Spannungshochsetzung soll möglichst konstant gehalten werden und im wesentlichen dem Sollwert entsprechen. Wie in Figur 1 ebenfalls angedeutet ist, könne die Regelschaltung 3 und der Transistor 2 Teil einer integrierten Schaltung 6 sein.

Während des Nicht-Betriebs des Verbrauchers 4 ist der Schalter S2 sowie der Schalter S1 jeweils geschlossen, so daß der Kondensator CH durch die Spannung der Batterie 1 geladen wird. Die Regelschaltung 3 steuert in diesem Fall den Transistor 2 in den nichtleitenden Zustand an.

Während der Betriebsphase des Verbrauchers 4 ist der Schalter S2 sowie der Schalter S1 geöffnet, so daß die Spannung des Kondensators CH zu der Batteriespannung V_{Bat} der Batterie 1 addiert wird. In dieser Betriebsphase des Verbrauchers 4 steuert die Regelschaltung 3 den Transistor 2 als steuerbaren Widerstand derart an, daß die Differenz zwischen dem Istwert der Ausgangsspannung Vₒᵤₜ und dem vorgegebenen Soll-oder Referenzwert möglichst gering ist.

Der Linearregler gemäß der vorliegenden Erfindung übernimmt somit sozusagen teilweise die Funktion des zweiten Schalters S2 von Figur 4. Dieser Wechselschalter S2 in Figur 4 wird sozusagen durch den Schließschalter S1 und dem Transistor 2 als steuerbaren Widerstand ersetzt.

Während der Einschaltdauer des Verbrauchers 4 werden Ist- und Sollwert der Ausgangsspannung Vₒᵤₜ in der Regelschaltung 3 verglichen und der Transistor 2 durch die Regelschaltung 3 entsprechend nachgesteuert. Bei ausgeschaltetem Verbraucher 4 wird der Transistor 2 durch die Regelschaltung 3 in den nichtleitenden Zustand versetzt. Dazu wird der Regelschaltung 3 ein Signal entsprechend dem Arbeitstakt des Verbrauchers 4 zugeführt, um die lastsynchrone Funktion der Ladungspumpe sicherzustellen. Diese Taktsignal wird dem Verbraucher 4 an einem Eingang 8 und der Regelschaltung 3 an einem Eingang 9 zugeführt.

Der Vorteil der Schaltung gemäß der vorliegenden Erfindung im Vergleich zu dem Stand der Technik ist, daß kein zusätzlicher Transistor oder steuerbarer Widerstand zur Realisierung der Linearreglerfunktion erforderlich ist. Im Gegensatz zur üblichen linearen Nachregelung wird die Schalteinheit der Ladungspumpe, die den Fließschalter S1 und den Transistor S2 aufweist, als steuerbarer Widerstand benutzt und hierdurch eine Spannungsregelung bei eingeschaltetem Verbraucher 4 erzielt. Der Linearregler ist also nicht als getrenntes Bauteil der Ladungspumpe nachgeschaltet, sondern ist vielmehr in die Ladungspumpenschaltung eingebunden. Wie bereits ausgeführt, kann die Regelschaltung 3 und der Transistor 2 in Form einer integrierten Schaltung 6 ausgeführt werden.

## Patentansprüche

1. Schaltung zur Spannungshochsetzung für gepulst betriebene Verbraucher, umfassend:
- einen Kondensator (CH),
- eine Schalteinheit (2, S1) mit einem ansteuerbaren Transistor (2) und
- eine Regelschaltung (3),
wobei der Kondensator (CH) durch die Schalteinheit (2, S1) so angesteuert ist, dass er in der Zeit, während der der gepulst betriebene Verbraucher (4) nicht im Betrieb ist, durch eine Batterie (1) aufgeladen wird und seine Spannung während des Betriebs des gepulst betriebenen Verbrauchers (4) zu der Spannung der Batterie (1) zum Erhalt einer Ausgangsspannung (Vₒᵤₜ) der Schaltung addiert wird, **dadurch gekennzeichnet,**
**dass** die Ausgangsspannung (Vₒᵤₜ) an dem gepulst betriebenen Verbraucher (V) anliegt und
**dass** die Regelschaltung (3) zur Regelung der Ausgangsspannung (Vₒᵤₜ) den Widerstandswert des Transistors (2) in Abhängigkeit von einem Vergleich zwischen der Ausgangsspannung (Vₒᵤₜ) und einem vorbestimmten Sollwert (Soll) derart verändert, dass die Ausgangsspannung (Vₒᵤₜ) im wesentlichen dem Sollwert (Soll) entspricht.

2. Schaltung zur Spannungshochsetzung nach Anspruch 1,
**dadurch gekennzeichnet,**
**dass** der Transistor (2) parallel zu dem Kondensator (CH) geschaltet ist.

3. Schaltung zur Spannungshochsetzung nach Anspruch 1 oder 2,
**dadurch gekennzeichnet**,
das die Schalteinheit weiterhin einen mit dem Transistor (2) in Serie verbundenen Schließschalter (S1) aufweist.

4. Schaltung zur Spannungshochsetzung nach einem der vorhergehenden Ansprüche,
**dadurch gekennzeichnet,**
**dass** während des Nichtbetriebs des Verbrauchers (4) der Transistor (2) in den nichtleitenden Zustand angesteuert ist.

5. Schaltung zur Spannungshochsetzung nach einem der vorhergehenden Ansprüche,
**dadurch gekennzeichnet,**
**dass** der Transistor (2) und die Regelschaltung (3) Teil einer integrierten Schaltung (6) sind.

6. Mobilfunkgerät,
**dadurch gekennzeichnet,**
**dass** es eine Schaltung zur Spannungshochsetzung nach einem der vorhergehenden Ansprüche aufweist.

## Claims

1. Circuit for voltage raising for pulsed-operated loads, comprising:
- a capacitor (CH),
- a switching unit (2, S1) with a controllable transistor (2), and
- a control circuit (3),
in which the capacitor (CH) is driven by the switching unit (2, S1) such that it is charged by a battery (1) during the time in which the pulsed-operated load (4) is not in operation, and its voltage is added to the voltage from the battery (1) during operation of the pulsed-operated load (4), in order to obtain an output voltage (Vₒᵤₜ) from the circuit
**characterized**
**in that** the output voltage (Vₒᵤₜ) is applied to the pulsed-operated load (V), and
**in that** the control circuit (3) varies the resistance of the transistor (2) in order to regulate the output voltage (Vₒᵤₜ) as a function of a comparison between the output voltage (Vₒᵤₜ) and a predetermined nominal value (nom), such that the output voltage (Vₒᵤₜ) essentially corresponds to the nominal value (nom).

2. Circuit for voltage raising according to Claim 1,
**characterized**
**in that** the transistor (2) is connected in parallel with the capacitor (CH).

3. Circuit for voltage raising according to Claim 1 or 2,
**characterized**
**in that** the switching unit also has a make-contact switch (S1) connected in series with the transistor (2).

4. Circuit for voltage raising according to one of the preceding claims,
**characterized**
**in that**, when the load (4) is not in operation, the transistor (2) is switched off.

5. Circuit for voltage raising according to one of the preceding claims,
**characterized**
**in that** the transistor (2) and the control circuit (3) are part of an integrated circuit (6).

6. Mobile radio,
**characterized**
**in that** said mobile radio has a circuit for voltage raising according to one of the preceding claims.

## Revendications

1. Circuit élévateur de tension pour des consommateurs en fonctionnement pulsé, comprenant:
- un condensateur (CH),
- une unité de commande (2, S1) avec un transistor commandable (2) et
- un circuit de réglage (3),
le condensateur (CH) étant commandé par l'unité de commande (2, S1) de manière telle qu'il est chargé par une batterie (1) dans le temps pendant lequel le consommateur en fonctionnement pulsé (4) ne fonctionne pas et que, pendant le fonctionnement du consommateur en fonctionnement pulsé (4), sa tension s'additionne à la tension de la batterie (1) pour maintenir une tension de sortie (Vₒᵤₜ) du circuit, **caractérisé en ce que** la tension de sortie (Vₒᵤₜ) est appliquée au consommateur en fonctionnement pulsé (V) et **en ce que** le circuit de réglage (3) servant au réglage de la tension de sortie (Vₒᵤₜ) modifie la valeur de la résistance du transistor (2) en fonction d'une comparaison entre la tension de sortie (Vₒᵤₜ) et une valeur de consigne prédéfinie (Soll) de manière telle que la tension de sortie (Vₒᵤₜ) correspond sensiblement à la valeur de consigne (Soll).

2. Circuit élévateur de tension selon la revendication 1,
**caractérisé en ce que**
le transistor (2) est monté en parallèle avec le condensateur (CH).

3. Circuit élévateur de tension selon la revendication 1 ou 2,
**caractérisé en ce que**
l'unité de commande comporte en outre un commutateur de fermeture (S1) relié en série au transistor (2).

4. Circuit élévateur de tension selon l'une des revendications précédentes,
**caractérisé en ce que**
le transistor (2) est commandé pour passer à l'état non conducteur pendant le non-fonctionnement du consommateur (4).

5. Circuit élévateur de tension selon l'une des revendications précédentes,
**caractérisé en ce que**
le transistor (2) et le circuit de réglage (3) font partie d'un circuit intégré (6).

6. Appareil radio mobile,
**caractérisé en ce**
**qu'**il comporte un circuit élévateur de tension selon l'une des revendications précédentes.
